# EUROPEAN PATENT APPLICATION

(11) **EP 4 357 728 A1**
(43) Date of publication of application: **24.04.2024**
(21) Application number: 22202878.9
(22) Date of filing: 21.10.2022
(51) Int. Cl.: G01B 9/02001, G01B 9/02055

(54) **METHOD TO DETERMINE AN ABSOLUTE POSITION OF AN OBJECT, INTERFEROMETER SYSTEM, PROJECTION SYSTEM AND LITHOGRAPHIC APPARATUS**

(71) Applicant: ASML Netherlands B.V., 5500 AH Veldhoven (NL)
(72) Inventor: KWEE, Patrick, 5500 AH Veldhoven (NL)
(74) Representative: ASML Netherlands B.V.

(57) **Abstract**

The invention provides a method to determine an absolute position of an object using an interferometer system, comprising the steps of:
providing a light beam;
splitting the light beam in a measurement beam and a reference beam;
guiding the measurement beam along a measurement path towards a reflective measurement surface on the object;
guiding the reference beam along a reference path towards a reflective reference surface on a reference object;
receiving the measurement beam after reflection on the reflective measurement surface and the reference beam after reflection on the reflective reference surface at a detector;
measuring a phase signal based on the measurement beam and the reference beam received by the detector,
separating a cyclic error phase component from the phase signal,
determining the absolute position of the object on the basis of the cyclic error phase component.

## Description

### FIELD OF THE INVENTION

The present invention relates to a method to determine an absolute position of an object using an interferometer system. The invention further relates to an interferometer system and to a projection system for optical lithography systems and/or a lithographic apparatus comprising such interferometer system.

### BACKGROUND ART

A lithographic apparatus is a machine that applies a desired pattern onto a substrate, usually onto a target portion of the substrate. A lithographic apparatus can be used, for example, in the manufacture of integrated circuits (ICs). In that instance, a patterning device, which is alternatively referred to as a mask or a reticle, may be used to generate a circuit pattern to be formed on an individual layer of the IC. This pattern can be transferred onto a target portion (e.g. comprising part of, one, or several dies) on a substrate (e.g. a silicon wafer). Transfer of the pattern is typically via imaging onto a layer of radiation-sensitive material (resist) provided on the substrate. In general, a single substrate will contain a network of adjacent target portions that are successively patterned. Known lithographic apparatus include so-called steppers, in which each target portion is irradiated by exposing an entire pattern onto the target portion at one time, and so-called scanners, in which each target portion is irradiated by scanning the pattern through a radiation beam in a given direction (the "scanning"-direction) while synchronously scanning the substrate parallel or anti-parallel to this direction. It is also possible to transfer the pattern from the patterning device to the substrate by imprinting the pattern onto the substrate.

In embodiments of a lithographic apparatus, interferometer systems are used to determine the position of movable objects with high accuracy. Examples of these movable objects are the substrate support and movable optic elements, for example mirrors of the projection optics box. Interferometer systems may also be used to accurately determine a path length to a fixed object, for example in a wavelength tracker.

A drawback of most known interferometers is that an interferometer is only able to determine relative displacements of the movable object with respect to a reference object. In order to determine an absolute position of the movable object with respect to the reference object, a separate zeroing sensor may be provided. This zeroing sensor is used to determine an absolute starting position of the movable object. Once this absolute starting position is known, the interferometer may determine a relative displacement of the movable object with respect to this absolute starting position in order to calculate an absolute position of the movable object during movements of the movable object.

The zeroing sensor is normally mounted at a specific location at which the absolute starting position of the movable object may be determined. The absolute position of the movable object may therefore only be determined when the movable object is within a relatively small measurement range of the zeroing sensor. The measurement range of the zeroing sensor is typically close to the zeroing sensor, for example within a few centimeters of the zeroing sensor. Each time the measurement of the movable object is started using the interferometer, the movable target has to be brought back into the relatively small measurement range of the zeroing sensor of the position measurement system. This may not only be the case when the lithographic apparatus is started, but for example also when the movable object is shortly out of view of the interferometer, for example when passing behind another movable object.

WO2019149515A1 discloses a method to determine an absolute position of a movable object with respect to a reference object using an interferometer system. The interferometer system comprises a measurement axis including a reflective measurement surface on the movable object and a reference axis including a reflective reference surface on the reference object. In this method a first beam and a second beam originating from a first light source are guided through the measurement axis and the reference axis, respectively. Similarly, a further first beam and a further second beam originating from a second light source are guided through the measurement axis and the reference axis, respectively. The light frequency of the second light source is tunable so that the light frequency of the second light source can be changed during the measurements.

WO2019149515A1 provides an algorithm in which specific measurements values of the interferometer signals obtained from the measurements in the measurement axis and the reference axis are selected to determine the absolute position of the movable object. This algorithm requires that the length of the reference axis is stable, i.e. does not change during measurements. Moreover, the calculations are relatively complex and may require some specific selection criteria for the measurement data which may complicate the application of the method.

In another known method to determine the absolute position of the movable object, it is required that the tuning frequency of the tunable light source is high in order to make the measurements less sensitive to movement of the movable object.

Although both methods are capable of determining an absolute position of a movable object with an interferometer system, both methods require additional hardware and/or substantial processing time in order to be capable of determining the absolute position of the movable object.

### SUMMARY OF THE INVENTION

It is an aim of the invention to provide an alternative or improved method to determine an absolute position of an object using an interferometer system. In particular, it is an aim of the invention to provide a method to determine an absolute position of a movable object using an interferometer which does not require additional hardware and/or substantial processing time to determine the absolute position of the movable object. It is a further aim to provide an interferometer system in which such method may be implemented.

According to an aspect of the invention, there is provided a method to determine an absolute position of an object using an interferometer system, comprising the steps of:
providing a light beam;
splitting the light beam in a measurement beam and a reference beam;
guiding the measurement beam along a measurement path towards a reflective measurement surface on the object;
guiding the reference beam along a reference path towards a reflective reference surface on a reference object;
receiving the measurement beam after reflection on the reflective measurement surface and the reference beam after reflection on the reflective reference surface at a detector;
measuring a phase signal based on the measurement beam and the reference beam received by the detector,
separating a cyclic error phase component from the phase signal,
determining the absolute position of the object on the basis of the cyclic error phase component.

According to an aspect of the invention, there is provided an interferometer system to determine an absolute position of an object, comprising:
a light source to provide a light beam;
a measurement light path optically connected to the light source to receive the measurement beam and comprising a reflective measurement surface arranged on the object and;
a reference light path optically connected to the light source to receive the reference beam and comprising a reflective reference surface arranged on a reference object;
at least one detector associated with the measurement light path and the reference light path to receive the measurement beam after reflection on the reflective measurement surface and the reference beam after reflection on the reflective reference surface;
a processing unit connected to the detector and configured to:
   receive a phase signal based on the measurement beam and the reference beam from the at least one detector,
   separate a cyclic error phase component from the phase signal, and
   determine the absolute position of the object on the basis of the cyclic error phase component.

According to an aspect of the invention, there is provided a projection system for optical lithography systems and/or a lithographic apparatus comprising such interferometer measurement.

### BRIEF DESCRIPTION OF THE DRAWINGS

Embodiments of the invention will now be described, by way of example only, with reference to the accompanying schematic drawings in which corresponding reference symbols indicate corresponding parts, and in which:
- Figure 1 depicts schematically a lithographic apparatus;
- Figure 2 shows an embodiment of an interferometer system according to the invention;
- Figure 3 shows a cyclic error phase component separated from an interferometer system; and
- Figure 4 shows a relationship between position of the object and the phase of the cyclic error.

### DETAILED DESCRIPTION

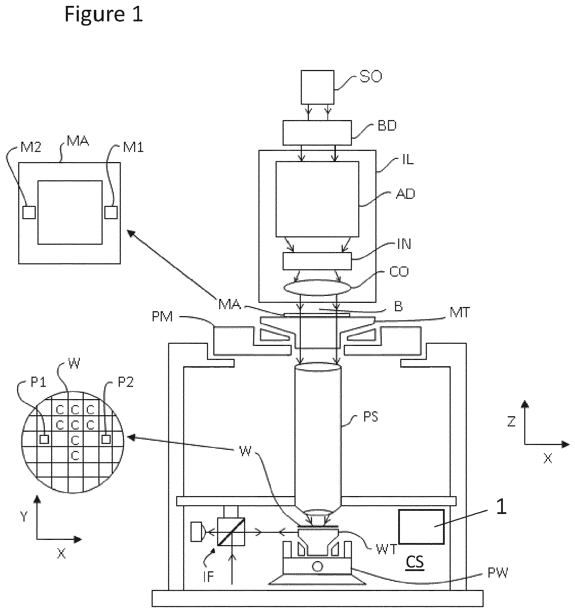

Figure 1 schematically depicts a lithographic apparatus according to one embodiment of the invention. The apparatus comprises an illumination system IL, a support structure MT, a substrate table WT and a projection system PS.

The illumination system IL is configured to condition a radiation beam B. The support structure MT (e.g. a mask table) is constructed to support a patterning device MA (e.g. a mask) and connected to a first positioner PM configured to accurately position the patterning device in accordance with certain parameters. The substrate table WT (e.g. a wafer table) is constructed to hold a substrate W (e.g. a resist-coated wafer) W and connected to a second positioner PW configured to accurately position the substrate in accordance with certain parameters. The projection system PS is configured to project a pattern imparted to the radiation beam B by patterning device MA onto a target portion C (e.g. comprising one or more dies) of the substrate W.

The illumination system IL may include various types of optical components, such as refractive, reflective, magnetic, electromagnetic, electrostatic or other types of optical components, or any combination thereof, for directing, shaping, or controlling radiation.

The term "radiation beam" used herein encompass all types of electromagnetic radiation, including ultraviolet (UV) radiation (e.g. having a wavelength of or about 365, 355, 248, 193, 157 or 126 nm) and extreme ultra-violet (EUV) radiation (e.g. having a wavelength in the range of 5-20 nm), as well as particle beams, such as ion beams or electron beams.

The support structure MT supports, i.e. bears the weight of, the patterning device MA. The support structure MT holds the patterning device MA in a manner that depends on the orientation of the patterning device MA, the design of the lithographic apparatus, and other conditions, such as for example whether or not the patterning device MA is held in a vacuum environment. The support structure MT can use mechanical, vacuum, electrostatic or other clamping techniques to hold the patterning device MA. The support structure MT may be a frame or a table, for example, which may be fixed or movable as required. The support structure MT may ensure that the patterning device MA is at a desired position, for example with respect to the projection system PS.

The term "patterning device" used herein should be broadly interpreted as referring to any device that can be used to impart a radiation beam B with a pattern in its cross-section such as to create a pattern in a target portion C of the substrate W. It should be noted that the pattern imparted to the radiation beam B may not exactly correspond to the desired pattern in the target portion C of the substrate W, for example if the pattern includes phase-shifting features or so called assist features. Generally, the pattern imparted to the radiation beam will correspond to a particular functional layer in a device being created in the target portion C, such as an integrated circuit.

The patterning device MA may be transmissive or reflective. Examples of patterning devices include masks, programmable mirror arrays, and programmable LCD panels. Masks are well known in lithography, and include mask types such as binary, alternating phase-shift, and attenuated phase-shift, as well as various hybrid mask types. An example of a programmable mirror array employs a matrix arrangement of small mirrors, each of which can be individually tilted so as to reflect an incoming radiation beam B in different directions. The tilted mirrors impart a pattern in a radiation beam B which is reflected by the mirror matrix.

The term "projection system" used herein should be broadly interpreted as encompassing any type of projection system, including refractive, reflective, catadioptric, magnetic, electromagnetic and electrostatic optical systems, or any combination thereof, as appropriate for the exposure radiation being used, or for other factors such as the use of an immersion liquid or the use of a vacuum.

As here depicted, the apparatus is of a transmissive type (e.g. employing a transmissive mask). Alternatively, the apparatus may be of a reflective type (e.g. employing a programmable mirror array of a type as referred to above, or employing a reflective mask).

The lithographic apparatus may be of a type having two (dual stage) or more substrate tables WT (and/or two or more mask tables). In such "multiple stage" machines the additional tables may be used in parallel, or preparatory steps may be carried out on one or more tables while one or more other tables are being used for exposure. In addition to one or more substrate tables WT, the lithographic apparatus may have a measurement stage that is arranged to be at a position beneath the projection system PS when the substrate table WT is away from that position. Instead of supporting a substrate W, the measurement stage may be provided with sensors to measure properties of the lithographic apparatus. For example, the projection system may project an image on a sensor on the measurement stage to determine an image quality.

The lithographic apparatus may also be of a type wherein at least a portion of the substrate W may be covered by a liquid having a relatively high refractive index, e.g. water, so as to fill a space between the projection system and the substrate. An immersion liquid may also be applied to other spaces in the lithographic apparatus, for example, between the patterning device MA and the projection system PS. Immersion techniques are well known in the art for increasing the numerical aperture of projection systems. The term "immersion" as used herein does not mean that a structure, such as a substrate W, must be submerged in liquid, but rather only means that liquid is located between the projection system PS and the substrate W during exposure.

Referring to figure 1, the illumination system IL receives a radiation beam B from a radiation source SO. The radiation source SO and the lithographic apparatus may be separate entities, for example when the radiation source SO is an excimer laser. In such cases, the source is not considered to form part of the lithographic apparatus and the radiation beam B is passed from the radiation source SO to the illumination system IL with the aid of a beam delivery system BD comprising, for example, suitable directing mirrors and/or a beam expander. In other cases the radiation source SO may be an integral part of the lithographic apparatus, for example when the radiation source SO is a mercury lamp. The radiation source SO and the illuminator IL, together with the beam delivery system BD if required, may be referred to as a radiation system.

The illumination system IL may comprise an adjuster AD for adjusting the angular intensity distribution of the radiation beam B. Generally, at least the outer and/or inner radial extent (commonly referred to as σ-outer and σ-inner, respectively) of the intensity distribution in a pupil plane of the illumination system can be adjusted. In addition, the illumination system IL may comprise various other components, such as an integrator IN and a condenser CO. The illumination system IL may be used to condition the radiation beam B, to have a desired uniformity and intensity distribution in its cross-section.

The radiation beam B is incident on the patterning device MT, which is held on the support structure MT, and is patterned by the patterning device MA. Having traversed the patterning device MA, the radiation beam B passes through the projection system PS, which focuses the beam onto a target portion C of the substrate W. With the aid of the second positioner PW and position sensor IF (e.g. an interferometric device, linear encoder or capacitive sensor), the substrate table WT can be moved accurately, e.g. so as to position different target portions C in the path of the radiation beam B. Similarly, the first positioner PM and another position sensor (which is not explicitly depicted in Figure 1) can be used to accurately position the patterning device MA with respect to the path of the radiation beam B, e.g. after mechanical retrieval from a mask library, or during a scan. In general, movement of the support structure MT may be realized with the aid of a long-stroke module and a short-stroke module, which form part of the first positioner PM. The long-stroke module may provide coarse positioning of the short-stroke module over a large range of movement. The short-stroke module may provide fine positioning of the support structure MT relative to the long-stroke module over a small range of movement. Similarly, movement of the substrate table WT may be realized using a long-stroke module and a short-stroke module, which form part of the second positioner PW. The long-stroke module may provide coarse positioning of the short-stroke module over a large range of movement. The short-stroke module may provide fine positioning of the substrate table WT relative to the long-stroke module over a small range of movement. In the case of a stepper (as opposed to a scanner) the support structure MT may be connected to a short-stroke actuator only, or may be fixed. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions C (these are known as scribe-lane alignment marks). Similarly, in situations in which more than one die is provided on the patterning device MA, the mask alignment marks M1, M2 may be located between the dies.

The depicted apparatus could be used in at least one of the following modes:

In a first mode, the so-called step mode, the support structure MT and the substrate table WT are kept essentially stationary, while an entire pattern imparted to the radiation beam B is projected onto a target portion C at one time (i.e. a single static exposure). The substrate table WT is then shifted in the X and/or Y direction so that a different target portion C can be exposed. In step mode, the maximum size of the exposure field limits the size of the target portion C imaged in a single static exposure.

In a second mode, the so-called scan mode, the support structure MT and the substrate table WT are scanned synchronously while a pattern imparted to the radiation beam B is projected onto a target portion C (i.e. a single dynamic exposure). The velocity and direction of the substrate table WT relative to the support structure MT may be determined by the (de-)magnification and image reversal characteristics of the projection system PS. In scan mode, the maximum size of the exposure field limits the width (in the non-scanning direction) of the target portion in a single dynamic exposure, whereas the length of the scanning motion determines the height (in the scanning direction) of the target portion.

In a third mode, the support structure MT is kept essentially stationary holding a programmable patterning device, and the substrate table WT is moved or scanned while a pattern imparted to the radiation beam B is projected onto a target portion C. In this mode, generally a pulsed radiation source is employed and the programmable patterning device is updated as required after each movement of the substrate table WT or in between successive radiation pulses during a scan. This mode of operation can be readily applied to maskless lithography that utilizes programmable patterning device, such as a programmable mirror array of a type as referred to above.

Combinations and/or variations on the above described modes of use or entirely different modes of use may also be employed.

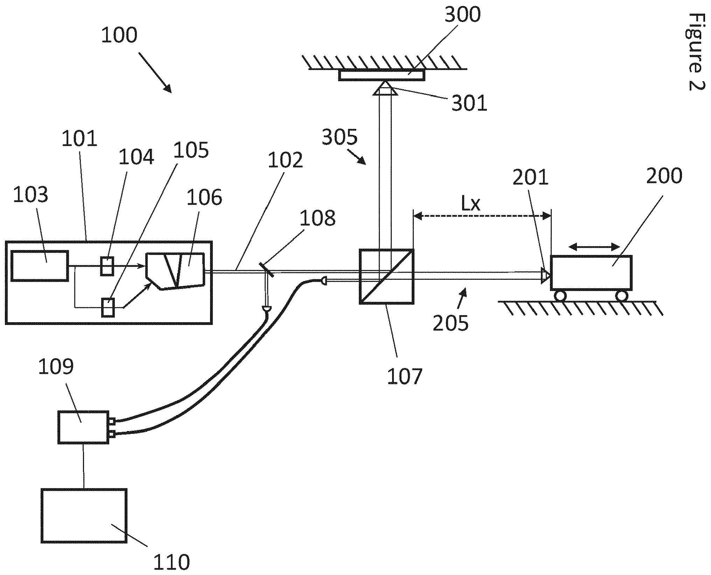

Figure 2 depicts an interferometer system 100 according to an embodiment of the invention. The interferometer system 100 is arranged to measure a position of a movable object 200. The movable object 200 is a part of the lithographic apparatus shown in Figure 1. The interferometer system 100 may for example be used to measure a position of a mirror of the projection system PS, the patterning device support MT or the substrate support WT. The movable object 200 comprises a reflective measurement surface 201. The position of the movable object 200 is determined with respect to a reference object 300 having a reference reflective surface 301.

The interferometer system comprises a light source system 101 to provide a light beam 102. The light source system 101 comprises a light source 103, for example a stabilized laser source, a first polarization and frequency shift device 104, a second polarization and frequency shift device 105 and a Rochon prism 106.

The interferometer system 100 is a heterodyne interferometer system. Light originating from the light source 103 is split into a first light beam part and a second light beam part. The first light beam part is provided in the first polarization and frequency shift device 104 with a first polarization and a first wavelength. The second light beam part is provided in the second polarization and frequency shift device 105 with a second polarization and a second wavelength. The first polarization and second polarization are orthogonal to each other. The first wavelength and the second wavelength are different. The first light beam part is intended to form a measurement beam and the second light beam part is intended to form a reference beam.

The first polarization and frequency shift device 104 and the second polarization and frequency shift device 105 may each comprise a separate polarizing unit and a frequency shift unit. The frequency shift unit for example comprises an opto-acoustic modulator. The first light beam part and the second light beam part are recombined in a Rochon prism 106. Any other optical component than a Rochon prism 106 may also be used to recombine the first light beam part and the second light beam part.

In practice, one of the first wavelength of the first light beam part or the second wavelength of the second light beam part may be the same as the wavelength of the light provided by the light source 103, while the other of the first wavelength or second wavelength is shifted by the respective polarization and frequency shift device 104, 105. It will be clear that for the one of the first or second wavelength that is not shifted, also no device for frequency shift is required.

The light source system 101 thus provides a light beam 102 having the first light beam part and the second light beam part.

The light beam 102 is guided to a polarizing beam splitter 107. The polarizing beam splitter 107 is arranged to split the first light beam part and the second light beam part to provide a measurement beam based on the first light beam part and a reference beam based on the second light beam part.

It is noted that before the light beam 102 is received by the polarizing beam splitter 107, a portion of the light beam 102 is split off at a non-polarizing beam splitter 108 to guide this portion of the light beam directly to the detector 109. This portion of the light beam 102 directly guided to the detector 109 can be used as a reference signal for the first and second wavelengths of the first light beam part and the second light beam part.

The measurement beam is guided along a measurement path 205 towards the reflective measurement surface 201 on the object 200. The reference beam is guided along a reference path 305 towards the reflective reference surface 301 on the reference object 300.

After reflection of the measurement beam on the reflective measurement surface 201 and the reference beam on the reflective reference surface 301, the measurement beam and the reference beam are recombined at the polarizing beam splitter 107 into a reflected light beam. The reflected light beam is guided to a detector 109. At the detector 109 a phase signal based on the measurement beam and the reference beam is measured.

The phase signal is introduced into a processing device 110. On the basis of the phase signal a relative movement of the movable object 200, i.e. a change in path length Lx, can be determined with high accuracy. A movement of the movable object 200 causes a phase shift in the phase signal. On the basis of these phase shifts in the phase signal, the processing device 110 is capable to determine the relative displacements of the movable object 200 with respect to the reference object 300. However, it is not possible to directly determine an absolute position of the movable object 200 on the basis of the phase signal. To determine an absolute position of the movable object 200 during movements a starting position of the movable object 200 should be known.

In prior art embodiments of interferometer systems, a separate zeroing sensor is provided to determine an absolute starting position of the movable object with respect to the reference object. Once this absolute starting position is known, the interferometer system may determine a relative displacement of the movable object with respect to this absolute starting position in order to determine an absolute position during movements of the movable object.

It has surprisingly been found that cyclic errors of the interferometer system 100 can also be used to determine the absolute position of the movable object 200 without the requirement of a separate zeroing sensor. Interferometer systems have cyclic errors. These cyclic errors are errors with a repetitive character. Generally, it is undesirable to have these cyclic errors as they disturb the phase signal and therefore may lead to incorrect measurements of the change in position of the movable object 200.

One cause of a cyclic error is a mismatch between the first and second polarizations of the first and second light beam parts of the light beam 102 and the polarization directions of the polarizing beam splitter 107. As a result of this mismatch, there may be an incomplete splitting of the different polarizations. This means that some light having the second wavelength will be present in the measurement beam and/or some light having the first wavelength will be present in the reference beam. This is also referred to as polarization leakage. The phase of the cyclic error caused by polarization leakage depends on the position of the movable object 200. Therefore, the phase delays may also be used to determine an actual position of the movable object 200.

By precisely measuring the phase of the cyclic error, the position of the movable object 200 may be determined. Moreover, the period of the cyclic error phase signal corresponds to a relative large displacement of the movable object 200. When this relative large displacement of the movable object 200 is larger than the maximum stroke of the movable object 200, the position of the movable object 200 that can be determined on the basis of the cyclic error phase signal can be used to determine an absolute position of the movable object 200.

The cyclic error phase is present in the phase signal measured at the detector 109. The processing device 110 is configured to separate a cyclic error phase component from the phase signal. The cyclic error phase component may for example be a first order phase component that can be taken out of the phase signal due to the repetitive occurrence of the cyclic error phase at a known frequency.

US 11287242 B2 and WO 2021213750 A1, the contents of which are herein incorporated in its entirety by reference, disclose interferometer systems in which the cyclic error is determined by the processing device in order to correct the phase signal for the occurrence of the cyclic errors.

US 11287242 B2 describes a method that includes determining a first cyclic error of an optical measurement system when the movable object of which the position is measured is at a first position, and a second cyclic error when the movable object is at a second position.

WO 2021213750 A1 is directed to a calibration method that doesn't require a moving object. A cyclic error is determined on the basis of measurements along two interferometer axes, each with two different wavelengths.

Since in these interferometer systems the cyclic error phase component is already determined in order to correct the phase signal, the cyclic error phase component is also available to determine an absolute position of the movable object 200.

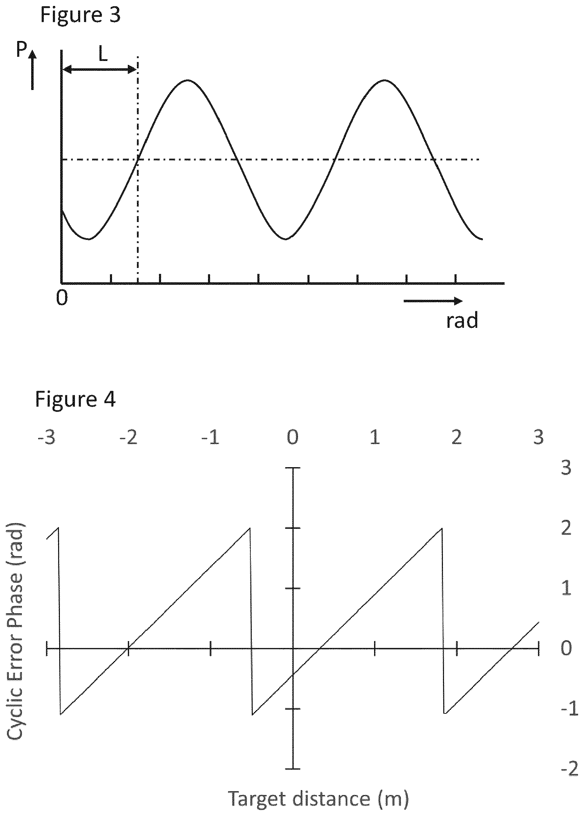

Figure 3 shows an example of a cyclic error phase component separated from a phase signal measured at detector 109. The cyclic error phase component is a first order periodic signal that is separated from the phase signal on the basis of its periodicity at a known frequency. This known frequency relates to the first wavelength λ of the first light beam part. The interferometer system 100 of Figure 2 is a single pass interferometer system in which the measurement beam is propagated once from the interferometer optics to the reflective measurement surface 201. In such single pass interferometer system the period of the cyclic error is λ/2.

In a double pass interferometer system, in which the measurement beam is propagated twice from the interferometer optics to the reflective measurement surface 201, the period of the cyclic error is for example λ/4. And in a 4-pass interferometer the period of the cyclic error is λ/8.

In the embodiment of Figure 2 and with a first wavelength of for example 640 nm, the period of the cyclic error is λ/4 = 640/4 = 160 nm. As a result, the first order cyclic error phase component is a sinusoidal signal having a period of 160 nm. By finding and separating this signal from the phase signal received by the detector 109, the cyclic error phase component can be obtained.

The separated cyclic error phase component is shown in Figure 3. The cyclic error caused by polarization leakage is formed by two components. The first component is the interference between the intended reference beam, i.e. the second light beam part in the reference path 305, and the light of the first light beam part that leaked into the reference path 305. The second component is the interference between the intended measurement beam, i.e. the first light beam part in the measurement path 205, and the light of the second light beam part that leaked into the measurement path 205. The superposition of these two components causes the cyclic error and determines its phase and amplitude. Since the measurement and reference beams have different wavelengths, the phase between the intended measurement beam and the reference beam that leaked into the measurement beam path depends on the length Lx of the measurement axis. This phase difference causes a phase lag L of the cyclic error, which is representative for the position of the movable object 200. As a result, the phase lag L can be used to determine this actual position of the movable object 200.

Figure 4 depicts a graph showing a relationship between a phase lag of the cyclic error signal and a position of the movable target 200. As can be seen in this graph, the period of the phase lag corresponds with a displacement of approximately 2.4 meters of the movable object 200. This displacement within one period of the phase lag of the cyclic error signal is substantially larger than the maximum displacement of the movable object 200. As a result, the phase lag will remain within one period and an absolute position of the movable object 200 corresponding with the phase lag in this period can be determined on the basis of the determined phase lag of the separated cyclic error phase component.

Hereinabove, a cyclic error phase component of the phase signal is used to determine an absolute position of a movable object 200. In other embodiments, this cyclic error phase component of the phase signal may also be used to determine an absolute position of a non-movable object, for example the path length within a wavelength tracker.

Further, hereinabove it has been described that the cyclic error caused by polarization leakage is used to determine an absolute position of the movable object 200. Instead of the cyclic error caused by polarization leakage, any other cyclic error that has a direct relationship between the phase of the cyclic error and the position of the movable object 200 may also be applied. Other cyclic errors that do not have this relationship should be minimized.

Although specific reference may be made in this text to the use of lithographic apparatus in the manufacture of ICs, it should be understood that the lithographic apparatus described herein may have other applications, such as the manufacture of integrated optical systems, guidance and detection patterns for magnetic domain memories, flat-panel displays, liquid-crystal displays (LCDs), thin-film magnetic heads, etc. The skilled artisan will appreciate that, in the context of such alternative applications, any use of the terms "wafer" or "die" herein may be considered as synonymous with the more general terms "substrate" or "target portion", respectively. The substrate referred to herein may be processed, before or after exposure, in for example a track (a tool that typically applies a layer of resist to a substrate and develops the exposed resist), a metrology tool and/or an inspection tool. Where applicable, the disclosure herein may be applied to such and other substrate processing tools. Further, the substrate may be processed more than once, for example in order to create a multi-layer IC, so that the term substrate used herein may also refer to a substrate that already contains multiple processed layers.

Although specific reference may have been made above to the use of embodiments of the invention in the context of optical lithography, it will be appreciated that the invention may be used in other applications, for example imprint lithography, and where the context allows, is not limited to optical lithography. In imprint lithography a topography in a patterning device defines the pattern created on a substrate. The topography of the patterning device may be pressed into a layer of resist supplied to the substrate whereupon the resist is cured by applying electromagnetic radiation, heat, pressure or a combination thereof. The patterning device is moved out of the resist leaving a pattern in it after the resist is cured.

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein. The descriptions above are intended to be illustrative, not limiting. Thus, it will be apparent to one skilled in the art that modifications may be made to the invention as described without departing from the scope of the claims set out below. Other aspects of the invention are set-out as in the following numbered clauses.
1. A method to determine an absolute position of an object using an interferometer system, comprising the steps of:
   providing a light beam;
   splitting the light beam in a measurement beam and a reference beam;
   guiding the measurement beam along a measurement path towards a reflective measurement surface on the object;
   guiding the reference beam along a reference path towards a reflective reference surface on a reference object;
   receiving the measurement beam after reflection on the reflective measurement surface and the reference beam after reflection on the reflective reference surface at a detector;
   measuring a phase signal based on the measurement beam and the reference beam received by the detector,
   separating a cyclic error phase component from the phase signal,
   determining the absolute position of the object on the basis of the cyclic error phase component.
2. The method of clause 1, wherein the interferometer system is a heterodyne interferometer system.
3. The method of clause 1 or 2, wherein the cyclic error is at least partially caused by polarization leakage.
4. The method of clause 3, wherein splitting the light beam in a measurement beam and a reference beam comprises splitting on the basis of different polarizations within the light beam, and wherein the polarization leakage is caused by incomplete splitting of the different polarizations.
5. The method of any of the clauses 1-4, wherein the light beam comprises a first light beam part having a first polarization and a second light beam part having a second polarization, wherein the first light beam part has a different wavelength than the second light beam part, wherein the first light beam part is intended to form the measurement beam and the second light beam part is intended to form the reference beam.
6. The method of any of the clauses 1-5, wherein the step of separating the cyclic error phase component comprises separating a first order cyclic error phase component.
7. The method of any of the clauses 1-6, wherein the step of separating the cyclic error phase component comprises separating a repetitive phase signal with known frequency.
8. The method of any of the clauses 1-7, wherein the step of determining the absolute position of the object comprises determining a phase shift of the first order cyclic error phase component.
9. The method of any of the clauses 1-8, wherein the object is a movable object.
10. The method of clause 9, wherein the movable object is a substrate support, a patterning device support or a part of a projection system of the lithographic apparatus.
11. The method of any of the clause 1-9, wherein the object is a wavelength tracker.
12. An interferometer system to determine an absolute position of an object, comprising:
   a light source to provide a light beam;
   a measurement light path optically connected to the light source to receive the measurement beam and comprising a reflective measurement surface arranged on the object and;
   a reference light path optically connected to the light source to receive the reference beam and comprising a reflective reference surface arranged on a reference object;
   at least one detector associated with the measurement light path and the reference light path to receive the measurement beam after reflection on the reflective measurement surface and the reference beam after reflection on the reflective reference surface;
   a processing unit connected to the detector and configured to:
      receive a phase signal based on the measurement beam and the reference beam from the at least one detector,
      separate a cyclic error phase component from the phase signal, and
      determine the absolute position of the object on the basis of the cyclic error phase component.
13. The interferometer system of clause 12, wherein the interferometer system is a heterodyne interferometer system.
14. The interferometer system of clause 12 or 13, wherein the cyclic error is at least partially caused by polarization leakage.
15. The interferometer system of clause 14, wherein the interferometer system comprises a polarizing beam splitter to split the light beam in a measurement beam and a reference beam on the basis of different polarizations within the light beam, and wherein the polarization leakage is caused by incomplete splitting of the different polarizations.
16. The interferometer system of any of the clauses 12-15, wherein the interferometer system comprises a light source system arranged to provide a first light beam part having a first polarization and a second light beam part having a second polarization, wherein the first light beam part has a different wavelength than the second light beam part, wherein the first light beam part is intended to form the measurement beam and the second light beam part is intended to form the reference beam.
17. The interferometer system of any of the clauses 12-16, wherein the cyclic error phase component comprises a first order cyclic error phase component.
18. The interferometer system of any of the clauses 12-17, wherein the processing unit is configured to separate the cyclic error phase component from the phase signal on the basis of separating a repetitive phase signal with known frequency.
19. The interferometer system of any of the clauses 12-18, wherein the processing unit is configured to determine absolute position of the object comprises on the basis of a phase shift of the first order cyclic error phase component.
20. A projection system for optical lithography systems comprising the interferometer system of any of the clauses 12-19.
21. A lithographic apparatus, comprising the interferometer system of any of the clauses 12-19.
22. The lithographic apparatus of clause 21, wherein the object is a movable object.
23. The lithographic apparatus of clause 22, wherein the movable object is a substrate support, a patterning device support or a part of a projection system of the lithographic apparatus.

## Claims

1. A method to determine an absolute position of an object using an interferometer system, comprising the steps of:
providing a light beam;
splitting the light beam in a measurement beam and a reference beam;
guiding the measurement beam along a measurement path towards a reflective measurement surface on the object;
guiding the reference beam along a reference path towards a reflective reference surface on a reference object;
receiving the measurement beam after reflection on the reflective measurement surface and the reference beam after reflection on the reflective reference surface at a detector;
measuring a phase signal based on the measurement beam and the reference beam received by the detector,
separating a cyclic error phase component from the phase signal,
determining the absolute position of the object on the basis of the cyclic error phase component.

2. The method of claim 1, wherein the interferometer system is a heterodyne interferometer system.

3. The method of claim 1 or 2, wherein the cyclic error is at least partially caused by polarization leakage.

4. The method of claim 3, wherein splitting the light beam in a measurement beam and a reference beam comprises splitting on the basis of different polarizations within the light beam, and wherein the polarization leakage is caused by incomplete splitting of the different polarizations.

5. The method of any of the claims 1-4, wherein the light beam comprises a first light beam part having a first polarization and a second light beam part having a second polarization, wherein the first light beam part has a different wavelength than the second light beam part, wherein the first light beam part is intended to form the measurement beam and the second light beam part is intended to form the reference beam.

6. The method of any of the claims 1-5, wherein the step of separating the cyclic error phase component comprises separating a first order cyclic error phase component.

7. The method of any of the claims 1-6, wherein the step of separating the cyclic error phase component comprises separating a repetitive phase signal with known frequency.

8. The method of any of the claims 1-7, wherein the step of determining the absolute position of the object comprises determining a phase shift of the first order cyclic error phase component.

9. The method of any of the claims 1-8, wherein the object is a movable object.

10. An interferometer system to determine an absolute position of an object, comprising:
a light source to provide a light beam;
a measurement light path optically connected to the light source to receive the measurement beam and comprising a reflective measurement surface arranged on the object and;
a reference light path optically connected to the light source to receive the reference beam and comprising a reflective reference surface arranged on a reference object;
at least one detector associated with the measurement light path and the reference light path to receive the measurement beam after reflection on the reflective measurement surface and the reference beam after reflection on the reflective reference surface;
a processing unit connected to the detector and configured to:
receive a phase signal based on the measurement beam and the reference beam from the at least one detector,
separate a cyclic error phase component from the phase signal, and
determine the absolute position of the object on the basis of the cyclic error phase component.

11. The interferometer system of claim 10, wherein the cyclic error is at least partially caused by polarization leakage.

12. The interferometer system of claim 11, wherein the interferometer system comprises a polarizing beam splitter to split the light beam in a measurement beam and a reference beam on the basis of different polarizations within the light beam, and wherein the polarization leakage is caused by incomplete splitting of the different polarizations.

13. The interferometer system of any of the claims 10-12, wherein the processing unit is configured to separate the cyclic error phase component from the phase signal on the basis of separating a repetitive phase signal with known frequency.

14. A projection system for optical lithography systems comprising the interferometer system of any of the claims 10-13.

15. A lithographic apparatus, comprising the interferometer system of any of the claims 10-13.
